(19) Europäisches Patentamt
European Patent Office
Office européen des brevets

(11) **EP 4 342 591 A1**

(12) **EUROPEAN PATENT APPLICATION**
published in accordance with Art. 153(4) EPC

(43) Date of publication:
27.03.2024 Bulletin 2024/13

(21) Application number: 21940832.5

(22) Date of filing: 20.05.2021

(51) International Patent Classification (IPC):
*B05D 3/02* (2006.01)    *B05D 5/00* (2006.01)
*B32B 5/18* (2006.01)    *B32B 9/00* (2006.01)
*B32B 27/32* (2006.01)

(52) Cooperative Patent Classification (CPC):
B05D 3/02; B05D 5/00; B32B 5/18; B32B 9/00;
B32B 27/32

(86) International application number:
PCT/JP2021/019274

(87) International publication number:
WO 2022/244218 (24.11.2022 Gazette 2022/47)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: **TOYO ALUMINIUM KABUSHIKI KAISHA**
Osaka 541-0056 (JP)

(72) Inventor: **AWATA, Hiroaki**
Osaka-shi, Osaka 541-0056 (JP)

(74) Representative: **Müller-Boré & Partner**
**Patentanwälte PartG mbB**
**Friedenheimer Brücke 21**
**80639 München (DE)**

(54) **LAYERED PRODUCT**

(57)    An object of the present invention is to provide a laminate which can be mass-produced and in which the layers having water and/or oil repellency are difficult to peel off or drop off.

The present invention relates to a laminated body in which a porous functional layer including a three-dimensional network structure formed on a base film, wherein the three-dimensional network structure comprises water-repellent and/or oil-repellent microparticles adhered to each other and a thermoplastic resin, and the porous functional layer has a porosity from greater than or equal to 1 volume% to less than or equal to 50 volume% in the region from the bottom of the porous functional layer to 50% thickness of the porous functional layer, and a porosity from greater than or equal to 50 volume% to less than or equal to 99 volume% in the region from exceeding 50% thickness of the porous functional layer to the surface of the porous functional layer.

FIG. 1

EP 4 342 591 A1

**Description**

[Technical Field]

The present invention relates to layered product having water and oil repellent properties.

[Background Art]

Water or oil repellent technologies have been widely studied for anti-adhesion and mold release applications. In particular, for the purpose of reducing adhesion of contents to packaging materials for foods, beverages, pharmaceuticals, cosmetics or the like, products have been developed with super water repellent treatment having a contact angle with water of 150° or more, or super oil repellent treatment showing a contact angle with oil of 150° or more. In general, super water-repellent and super oil-repellent properties are realized by modification of chemical properties by coating or modification of physical properties by imparting minute irregularities.

For example, Patent Literature 1 discloses that a thin metal film is formed on the surface of a base material, and subsequently hydrophobic microparticles are deposited on the surface by CVD method using an organic silicon compound, and then the metal film and hydrophobic microparticles or hydrophobic microparticles each other are combined by exposure to an atmosphere containing a similar organic silicon compound to form a water repellent layer with excellent durability.

In addition, in Patent Literature 2, a technology is proposed to form a water repellent layer with excellent durability in which hydrophobic fine particles do not easily come off by treating a water repellent layer containing hydrophobic fine particles and a binder (metal alkoxide), and to enable heat sealing by treating the water repellent layer with an adhesive layer.

According to Patent Literatures 3 and 4, it is disclosed that a water-repellent surface with excellent durability is formed by imparting fine surface irregularities to a surface of a substrate by a nanoimprinting method (UV curing method, thermosetting method). In Patent Literature 3, the UV curing method is used, and a mold with a concave structure existing at a pitch of several hundred nm is pressed against UV curable resin, and the resin is cured by UV irradiation to form convex pillars at a pitch of several hundred nm. Patent Literature 4 suggests that a thermosetting method is used, and a mold in which a concave structure exists at a pitch of several hundred nm is pressed against thermoplastic resin and cooled after forming convex pillars.

[Citation List]

[Patent Literature]

[Patent Literature 1] Patent Application Publication JP 2014-152389
[Patent Literature 2] Patent Application Publication JP 2017-100778
[Patent Literature 3] Patent Application Publication JP 2018-187767
[Patent Literature 4] Patent Application Publication JP 2018-95799

[Summary of the Invention]

[Problem to be solved by the invention]

However, the method of Patent Literature 1 needs a process for depositing and growing hydrophobic particles after forming a metallic thin film. Accordingly, Patent Literature 1 requires large-scale facilities while making mass production difficult.

In the technology of Patent Literature 2, hydrophobic fine particles are mixed with tetraethoxysilane (metal alkoxide) as a binder to form an ultra water repellant layer, but the adhesive strength between the ultra water repellant layer and a substrate is weak, and the ultra water repellant layer itself may peel off relatively easily.

In the methods of Patent Literatures 3 and 4, a super water repellant layer is formed by the nanoimprint method, but the productivity of the nanoimprint method is low compared to surface modification by coating, and is not suitable for production on an industrial scale.

Therefore, the main object of the present invention is to provide a laminate that can be mass-produced and has a water-repellent and/or oil-repellent layer that is difficult to peel off or drop off.

[Means to solve the problem]

The inventor has completed the present invention after diligently studying the problems of the conventional technology and finding that the above-mentioned object can be achieved by employing a specific layer structure.

In other words, the present invention relates to the following laminated body.

1. A laminated body in which a porous functional layer including a thermoplastic resin and a three-dimensional network structure comprising water-repellent and/or oil-repellent fine particles adhered to each other is formed on a base film, wherein

the porous functional layer has, in the thickness direction, a porosity from greater than or equal to 1 volume% to less than or equal to 50 volume% in the region from the bottom of the porous functional layer to 50% thickness of the porous functional layer, and a porosity from greater than or equal to 50 volume% to less than or equal to 99 volume% in the region from more than 50% thickness of the porous functional layer to the surface of the porous functional layer.

2. The laminated body according to the above 1, wherein the voids of the three-dimensional network structure at least in the region from the bottom of the porous functional layer to 50% thickness of the porous functional layer are filled with the thermoplastic resin.

3. The laminated body according to the above 1 or 2, wherein a portion of the porous functional layer is embedded in the base film.

4. The laminated body according to any one of the above 1 to 3, wherein the average primary particle diameter of the fine particles is 5 to 50 nm.

5. The laminated body according to any one of the above 1 to 4, wherein the mass ratio of the fine particles to the thermoplastic resin is 50:50 to 80:20.

6. The laminated body according to any one of the above 1 to 5, wherein the thermoplastic resin includes a polyolefin resin.

7. A method for producing a laminated body having water and/or oil repellency, comprising the steps of:

(1) applying a coating liquid containing water and/or oil repellent fine particles and a thermoplastic resin to a base film; and
(2) heat-treating the coated film obtained in the preceding step.

8. The manufacturing method according to the above 7, wherein the coating liquid is a dispersion liquid in which comprising water-repellent and/or oil-repellent fine particles and thermoplastic resin particles are dispersed in a solvent.

[Advantages of the Invention]

According to the present invention, it is possible to provide a laminate that can be mass-produced and has a water-repellent and/or oil-repellent layer that is difficult to peel off or drop off.

In particular, the laminate of the present invention has a porous functional layer containing thermoplastic resin in which functional particles form a three-dimensional network structure, and has a non-uniform structure (preferably a gradient structure) in which the porosity of the porous functional layer is lower near the base film and higher near the surface of the porous functional layer. By employing such a structure, the adhesion between the base film and the porous functional layer is increased, and both layers form an integrated structure. As a result, the porous functional layer can effectively be suppressed or prevented from peeling or falling off from the base film. Therefore, the porous functional layer can exhibit a certain degree of durability against relatively strong frictional forces. Such a laminate can be formed, for example, by using a specific coating liquid as described below. As a result, it is possible to more efficiently provide a laminate that can effectively sustain the desired water and/or oil repellency.

[Brief Description of Drawings]

Fig. 1: A schematic diagram (image) of an example of the layer structure of the laminate of the invention.
Fig. 2: An image of the layer structure of the laminate produced in Example 1, as observed with a scanning electron microscope.
Fig. 3: A 3D image of the porous functional layer in the laminate of Example 1, created using FIB-SEM.
Fig. 4: An analytical image of the porous functional layer extracted in Fig. 3.

[Embodiment of the invention]

1. Laminated body

The laminated body (the laminate of the invention) is a laminated body in which a porous functional layer including a thermoplastic resin and a three-dimensional network structure comprising water-repellent and/or oil-repellent fine particles adhered to each other is formed on a base film, wherein
the porous functional layer has, in the thickness direction, a porosity from greater than or equal to 1 volume% to less than or equal to 50 volume% in the region from the bottom of the porous functional layer to 50% thickness of the porous functional layer, and a porosity from greater than or equal to 50 volume% to less than or equal to 99 volume% in the region from more than 50% thickness of the porous functional layer to the surface of the porous functional layer.

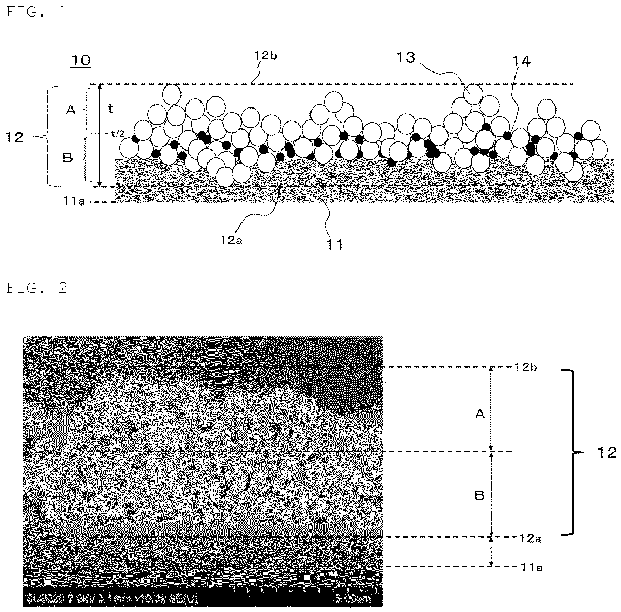

Figure 1 is a schematic diagram showing an example of the layer structure of the laminate of the invention. As shown in Fig. 1, the laminate 10 has a porous functional layer 12 formed on a base film 11. This porous functional layer 12 is supported by being fixed (adhered) on the base film 11. The porous functional layer 12 includes a three-dimensional network structure comprising water-repellent and/or oil-repellent fine particles 13 (hereinafter referred to as "functional particles" unless otherwise specified) adhered to each other and thermoplastic resin 14. In the present laminate 10, the thermoplastic resin 14 may be included either in the periphery or inside of the three-dimensional network structure, but is preferably included at least in the voids of the three-dimensional network structure as shown in Figure 1.
The porous functional layer 12 has a porosity of 1 volume% or more and 50 volume% or less in a region from the porous functional layer bottom 12a to 50% thickness (t/2) of the porous functional layer in a direction of the thickness t (hereinafter referred to as "region B"), and a porosity of 50 volume% or more and 99 volume% or less in the region from exceeding 50% thickness of the porous functional layer to the porous functional layer surface 12b. In other words, the structure of the porous functional layer 12 is such that the density of the functional particles and thermoplastic resin is higher in region B, which is closer to the base film, and the density is lower in region A, which is closer to the porous functional layer surface. By employing this structure, the porous functional layer can be fixed to the base film with greater force, and as a result, water and oil repellency can be maintained for a longer period.
In the present invention, the thickness t of the porous functional layer can be calculated by the following formula based on the position of the bottom surface 11a of the base film 11, where the horizontal position of the functional particle at the lowest position of the three-dimensional network structure is the bottom surface 12a of the porous functional layer and the horizontal position of the functional particle at the highest position of the three-dimensional network structure is the surface 12b of the porous functional layer, as shown in Figure 1.

```
Thickness of the porous functional layer t =

  (distance from bottom surface 11a to porous functional layer

  surface 12b (difference in height)) - (distance from bottom

  surface 11a to porous functional layer bottom surface 12a

  (difference in height))
```

Also as shown in Fig. 1, in laminate 10 of the present invention, it is desirable that part of the aforementioned porous functional layer 12 (especially the three-dimensional network structure) is embedded in the base film 11. This can enhance the adhesion of the porous functional layer to the base film.
In the following, each of the layers constituting the laminate of the invention as well as the materials, etc. constituting each layer will be described respectively.

Base film

The base film functions as a support layer that supports the porous functional layer in the laminate of the invention. Therefore, as long as it has such a function, its material is not particularly limited, and can be made of resins (e.g., synthetic resins such as polyester, polyethylene, polypropylene, etc.), fibrous materials (e.g., paper, synthetic paper, nonwoven fabric, woven fabric, wood board, etc.), metals or alloys (e.g., metal foil such as aluminum foil, etc.), glass (glass plate) or the like. In addition to single materials, composite materials, laminated materials, etc. of these materials can be exemplified.

In particular, at least one type of resin film selected from the group consisting of polypropylene film, polyethylene film and polyester film can be suitably used as a base film in the present invention.

In particular, when the base material film is a resin film, the resin film may be either a stretched film or an unstretched film. Furthermore, both uniaxially oriented film or biaxially oriented film can be used for the stretched film. Various types of resin films with surface treatment such as corona treatment, for example, can also be used as the base film.

The thickness of the base film is not limited, but can be set appropriately according to the material of the base film, the application of the present invention laminate, and other factors. Generally, however, it can be set appropriately within the range of 20 to 80 $\mu$m, but is not limited thereto.

The surface (especially the surface on which the porous functional layer is laminated) of the base film may be treated with a surface treatment. This can further enhance the adhesion (bonding) between the base film and the porous functional layer. The aforementioned surface treatment includes, for example, unevenness treatment by additives (preferably filled particles), unevenness treatment by embossing, or the like. The height of the unevenness is not limited, but it is particularly preferred to be 5 to 60 $\mu$m, and 20 to 50 um is more preferred.

The base film may be either a single layer or multiple layers. For example, a laminated film consisting of a heat seal layer on at least one side of a resin film can be used as the base film.

In this case, the heat sealant used to form the heat seal layer can include ingredients used in known or commercially available adhesives such as lacquer type adhesives, easy peel adhesives, and hot melt adhesives, as well as components of sealant films known or commercially available.

The main constituting the heat seal layer are not particularly limited to, and include, for example, low-density polyethylene, medium-density polyethylene, high-density polyethylene, linear (linear) low-density polyethylene, polypropylene, ethylene-vinyl acetate copolymer, ionomer resin, ethylene -acrylic acid copolymer, vinyl chloride-vinyl acetate-acrylic ester copolymer, ethylene-ethyl acrylate copolymer, ethylene-methacrylic acid copolymer, ethylene-propylene copolymer, acid-modified polyolefin resin in which polyolefin such as methylpentene polymer, polybutene polymer, polyethylene or polypropylene, or the like is modified with unsaturated carboxylic acid such as acrylic acid, methacrylic acid, maleic acid, maleic anhydride, fumaric acid, itaconic acid, or the like, polyvinyl acetate resins, poly(meth)acrylic resins, polyacrylonitrile resins, polyvinyl chloride resins, other thermally adhesive resins, as well as copolymers including combinations of monomers constituting these resins, modified resins of these resins, or the like can be used.

Other components may be included in the base film as long as they do not substantially adversely affect the advantages of the present invention. For example, adhesive agents, anti-blocking agents, colorants, thickening agents, or the like may be included. In particular, an anti-blocking agent can be suitably used in the present invention. As an anti-blocking agent, there are no particular limitations, and at least one selected from the group consisting of polyethylene wax, polypropylene wax, silica, inorganic particles, synthetic resin particles, etc. can be suitably added, for example.

Porous Functional Layer

The porous functional layer in the laminate of the invention is a layer having water and/or oil repellency. The porous functional layer includes a three-dimensional network structure consisting of functional particles adhered to each other and a thermoplastic resin.

The functional particles (particle groups) form a three-dimensional network structure because individual functional particles contact and are fixed to each other. In particular, the three-dimensional network structure is porous (agglomerate) and has voids (pores) formed between the functional particles. These pores may be independent pores, continuous pores, or both independent and continuous pores.

In the present invention, the porosity of the porous functional layer is characterized in that the porosity of region A is relatively higher than that of region B when region B is compared with region A. In other words, the functional particles and thermoplastic resin are more densely packed on the base film side of the functional layer. Such pore distribution (density distribution) together with the presence of thermoplastic resin makes the porous functional layer to be more adherent to the base film and contributes to the long-term persistence of high water and/or oil repellency due to the high porosity of the functional layer surface (existence of surface unevenness and air layer) .

The amount of the porous functional layer can be set appropriately according to, for example, the desired water and/or oil repellency, the type of thermoplastic resin used or the like and can be set to be within the range of the amount of functional particles as shown below. For example, it can be set within the range of about 0.6 to 5 g/m$^2$ (especially 1 to 3 g/m$^2$), but is not limited to this.

The degree of water and/or oil repellency of the porous functional layer is not limited, but the following properties are preferred. For water repellency, the contact angle with water can be 150 degrees or higher (so-called super water repellency). For oil repellency, the contact angle with oil can be 150 degrees or more (so-called super oil repellency).

The thickness of the porous functional layer is not particularly limited, but can normally be in the range of 1 to 20 um, and especially 1 to 5 um is preferred. By setting the thickness within such a range, it is possible to obtain even higher water or oil repellency.

The functional particles constituting the porous functional layer are not restricted as long as the particles have water and/or oil repellency. For example, hydrophobic oxide particles can be suitably used.

For example, at least one type of particles (powder) selected from the group consisting of silicon oxide, titanium oxide, aluminum oxide, zinc oxide, or the like can be used as hydrophobic oxide particles. Among these, silicon oxide particles are preferred.

The hydrophobic oxide particles preferably have an average primary particle diameter of 5 to 50 nm, more preferably 7 to 30 nm. The aforementioned measurement of the average primary particle diameter can be performed using a transmission electron microscope or a scanning electron microscope. More specifically, the average primary particle diameter can be obtained by taking pictures with a transmission electron microscope or scanning electron microscope, measuring the diameters of 200 pieces or more particles on the pictures, and calculating the arithmetic mean value.

Nano-level oxide particles as described above can be made from known or commercially available products. For example, as silica, the product names "AEROSIL R972," "AEROSIL R972V," "AEROSIL R972CF," "AEROSIL R974," "AEROSIL RX200," "AEROSIL RY200" (manufactured by AEROSIL Japan Co.), "AEROSIL R202", "AEROSIL R805", "AEROSIL R812", "AEROSIL R812S" (manufactured by Evonik Degussa), "Silohovic 100", "Silohovic 200", "Silohovic 603" (manufactured by Fuji Silicia Chemical Co.). As titania, examples include the product name "AEROXIDE $TiO_2$ T805" (manufactured by Evonik Degussa). Examples of alumina include AEROXIDE Alu C (Evonik Degussa) or the like treated with a silane coupling agent to make the particle surface hydrophobic.

Among these, hydrophobic silica particles can be used suitably. In particular, hydrophobic silica particles having trimethylsilyl groups on the surface are preferred in that they provide better non-adhesive properties. Corresponding commercial products include, for example, the aforementioned AEROSIL R812 and AEROSIL R812S (both manufactured by Evonik Degussa).

As a particle having oil-repellent properties, for example, a composite particle obtained by surface-treating an oxide fine particle as a core in order to impart hydrophobic properties to the particle can be suitably used.

At least one type of particle (powder) selected from the group consisting of silicon oxide, titanium oxide, aluminum oxide, zinc oxide, or the like can be used as the oxide fine particle for the core. Among them, silicon oxide particles are preferred.

Commercially available products can also be used for the oxide fine particles that serve as the core. As silicon oxide, for example, the product name "AEROSIL 200" ("AEROSIL" is a registered trademark; the same applies hereinafter), "AEROSIL 130", "AEROSIL 300", "AEROSIL 50", "AEROSIL 200 FAD", and "AEROSIL 380" (all manufactured by AEROSIL Japan Co., Ltd.) can be used. For titanium dioxide, product names such as "AEROXIDE $TiO_2$ T805" (manufactured by Evonik Degussa) can be used. For aluminum oxide, examples include "AEROXIDE Alu C 805" (manufactured by Evonik Degussa).

The method of producing the composite particle is not particularly limited, and the covering layer may be formed on the metal oxide particle (powder) by, for example, a known coating method or granulation method, with using a polyfluoroalkyl methacrylate resin as the coating material. More specifically, the composite particle can be favorably produced by a production method comprising a step (the coating step) of coating the metal oxide particle with a coating liquid in which a liquid polyfluoroalkyl methacrylate resin is dissolved or dispersed in a solvent.

In the above manufacturing method, a polyfluoroalkyl methacrylate resin in liquid form at room temperature (25 °C) and under normal pressure can be advantageously used. As such polyfluoroalkyl methacrylate resins, a copolymer of polyfluorooctyl methacrylate, 2-N,N-diethylaminoethyl methacrylate, 2-hydroxyethyl methacrylate, and 2,2'-ethylenedioxydiethyl dimethacrylate, or the like can be suitably used. Commercially available products can be used.

The solvent used for the coating liquid is not restricted, and in addition to water, organic solvents such as alcohols and toluene can be used, but water is preferred in the present invention. In other words, it is preferable to use a coating liquid in which the polyfluoroalkyl methacrylate resin is dissolved and/or dispersed in water.

Although the content of polyfluoroalkyl methacrylate resin in the above coating liquid is not particularly limited, it is generally set at about 10 to 80% by weight, and especially 15 to 70% by weight, of which 20 to 60% by weight is more preferred.

The method of coating the coating liquid on the surface of the oxide particles can follow any known method, for example, a spray method, soaking method, agitated granulation method, or the like can be employed. In the present invention, a spray coating method is particularly preferred because of its superiority in terms of uniformity or the like.

After coating with the coating liquid, the composite particles can be obtained by removing the solvent by heat treatment. The heat treatment temperature is usually about 150 to 250°C, especially 180 to 200°C is preferred. Although the atmosphere for heat treatment is not limited, an inert gas (non-oxidizing) atmosphere such as nitrogen gas, argon gas or the like is desirable. Further, for example, if necessary, a series of processes consisting of the coating process and the heat treatment process can be conducted one or more times. This makes it possible to advantageously control the amount of coating or the like.

The surface of the composite particle thus obtained contains a polyfluoroalkyl methacrylate resin. By including such a resin, a strong coating layer having relatively high adhesiveness can be formed on the surface of the oxide particles because the coating layer has excellent affinity with the oxide particles, and at the same time, higher water or oil repellency can be achieved.

The amount of functional particles adhered (weight after drying) may be sufficient to form a three-dimensional network structure in particular, but usually 0.01 to 10 $g/m^2$ is preferred, especially 0.2 to 1.5 $g/m^2$ is more preferred, among them, 0.2 to 1 $g/m^2$ is most preferred.

Thermoplastic resin

In the laminate of the invention, the thermoplastic resin contained in the porous functional layer mainly functions to strengthen the adhesion (bonding) between the porous functional layer and the base film, and between the functional particles each other in the porous functional layer.

The type of thermoplastic resin is not limited as long as it exhibits adhesiveness to the base film. For example, polyolefin resins, polyamide resins, polyester resins, urethane resins, acrylic resins, and other resins can be used.

In particular, for example, when the base film is a polypropylene film, a polyolefin resin (especially a polypropylene resin or a modified polypropylene resin) can be suitably employed as the thermoplastic resin. For example, when the base film is polyethylene terephthalate (PET) film, an acrylic resin and a polyester resin can be suitably used as the thermoplastic resins. In this way, by selecting a thermoplastic resin having higher adhesion to the base film to be used, it is possible to further enhance the adhesion performance between the porous functional layer and the base film.

The softening point of the thermoplastic resin to be used is not particularly limited, but may normally be in the range of 60 to 150°C.

The content of the thermoplastic resin is not particularly limited, but when the total of the functional particles and the thermoplastic resin is 100% by mass, it is preferable to set the functional particles: the thermoplastic resin = about 50 mass%: 50 mass% to 80 mass%: 20 mass%. This makes it possible to achieve better adhesion between the base film and the porous functional layer, and at the same time, higher water or oil repellency.

2. Method of manufacturing laminate

The laminate of the invention can be suitably produced by the following method, for example. That is, a method for producing a laminated body having water and/or oil repellency, comprising the steps of: (1) applying a coating liquid containing water and/or oil repellent fine particles and a thermoplastic resin to a base film (coating film forming process); and (2) heat-treating the coated film obtained in the preceding step (heat treating process) can be advantageously employed.

Coating film forming process

In the coating film formation process, a coating liquid containing water-repellent and/or oil-repellent fine particles and a thermoplastic resin is applied to a base film.

The coating liquid usually contains functional particles, a thermoplastic resin and a solvent. The types of functional particles and thermoplastic resin and the ratio of both are as described above. The solvent is not limited and can be selected according to the type of thermoplastic resin used or the like. For example, organic solvents such as alcohol solvents (ethanol, methanol, isopropyl alcohol (IPA), hexyl alcohol, etc.), ketone solvents (acetone, ketone, methyl ethyl ketone (MEK), etc.), hydrocarbon solvents (cyclohexane, normal pentane, normal hexanemethyl cyclohexane (MCH), etc.), aromatic solvents (toluene, etc.), glycol solvents (propylene glycol, hexylene glycol, butyldiglycol, pentamethylene glycol, etc.) can be used as appropriate.

In the coating liquid, the thermoplastic resin and the like may be dissolved in a solvent to form a solution, but it is especially desirable that the functional particles and thermoplastic resin particles be in the form of a dispersion in which they are dispersed in a solvent. As a result, when the coating liquid is applied to the base film, the functional particles and thermoplastic resin particles are applied homogeneously, thus enhancing the adhesion between the functional particles each other as well as between the porous functional layer and the base film, while maintaining the properties of the functional particles. When the dispersion is applied to the base film, most of the functional particles and thermoplastic resin particles move downward (in the direction of gravity), so the porosity of the porous functional layer becomes lower in area B which is closer to the base film of the porous functional layer, and the porosity becomes higher in area A. In this way, a porous functional layer with a gradient structure can be effectively formed.

The method of coating is not particularly limited, and known methods such as roll coating, various gravure coatings, bar coaters, doctor blade coatings, comma coaters, spray coatings, brush coatings or the like can be employed as appropriate.

After coating, a drying process may be performed if necessary. The drying method is not restricted and may be either natural drying or heat drying. In the case of heat drying, the temperature is usually 60 to 100°C, especially 80 to 90°C. The heating time can be set according to the heating temperature or the like, and is usually 3 to 30 seconds, but not limited to this.

Heat Treatment Process

In the heat treatment process, the coating film obtained in the coating film formation process described above is heat treated. By heat treatment, the functional particles and thermoplastic resin are bonded in the porous functional layer, and the thermoplastic resin and the base film are bonded, as a result, a laminate having excellent adhesion between the base film and the porous functional layer can be obtained. Furthermore, since a portion of the functional particles and/or thermoplastic resin can be embedded in the base film during the heat treatment process, higher adhesion can be obtained and the base film and porous functional layer can be made into an integrated structure more effectively.

It is desirable to set the heat treatment temperature in a temperature range lower than the heat resistance temperature of the base film and not lower than the temperature at which the thermoplastic resin contained in the porous functional layer softens. Thus, for example, if the heat resistance temperature of the base film is 150°C and the softening temperature of the thermoplastic resin is 120°C, the heat treatment temperature can be set to about 120-145°C (or about 125-140°C, for example).

The heat treatment time may be sufficient time to obtain the desired adhesion, and be 10 seconds to 10 minutes for example, but not limited to that.

3. Use of the laminate

The laminate of the invention can be used for various applications requiring anti-adhesion performance, antifouling properties, water and/or oil repellency or the like. For example, it can be preferably used as a packaging material for packaging or sealing food, pharmaceuticals, cosmetics or the like. For example, various contents can be loaded into a packaging bag formed by using the laminate of the invention with its porous functional layer positioned on the inside, thereby sealed packaging products can be provided. Examples

Examples and Comparative examples are given below to more concretely explain the features of the present invention. However, the scope of the invention is not limited to the Examples.

Example 1

A commercially available film (biaxially oriented polypropylene film (OPP)) with a thickness of 40 um was used as the base film.

A coating liquid for forming a porous functional layer was prepared. Hydrophobic oxide particles with water repellency (product name "AEROSIL R812S", Evonik Degussa, BET specific surface area: 200 $m^2$/g, average primary particle diameter: 7 nm) and thermoplastic resin (modified polyolefin resin, product name "Zyxene A", Sumitomo Seika Co. were added to ethanol. And then, a stirrer was used to stir the mixture at 2000 rpm for 5 minutes. The coating liquid was thus obtained. The mass ratio of hydrophobic oxide particles to thermoplastic resin in the coating liquid was 50:50, and the total solid content of hydrophobic oxide particles and thermoplastic resin in the coating liquid was 5 mass%.

The resulting coating liquid was applied to the above film using a bar coater, and dried at 120°C for 60 seconds to form the porous functional layer. The coating amount of the porous functional layer after drying was 2.5 $g/m^2$. A laminate with a porous functional layer formed on the surface of the base film was thus prepared.

Example 2

A laminate was prepared by the same method as in Example 1, except that surface-modified silica particles obtained by the following procedure were used instead of hydrophobic oxide particles.

5 g of hydrophilic silica particles (product name "AEROSIL 200", manufactured by AEROSIL Japan, BET specific surface area: 200 $m^2$/g, average primary particle diameter: 12 nm) were placed in a reaction tank and sprayed with 500 g of a commercial surface treatment agent while stirring under a nitrogen gas atmosphere, followed by stirring at 200°C for 30 minutes, then cooling it. Thus, a powder of surface modified silica particles (oxide composite particles) was obtained. As the above surface treatment agent, a water dispersion of copolymer of polyfluorooctyl methacrylate, 2-N,N-diethylaminoethyl methacrylate, 2-hydroxyethyl methacrylate and 2,2'-ethylenedioxydiethyl dimethacrylate (solid content: 20 mass%) was used.

Example 3

A Laminate was prepared in the same manner as in Example 1, except that ethylene vinyl acetate copolymer resin (product name: "SEPORJON VA", manufactured by Sumitomo Seika Co.

Example 4

A Laminate was prepared in the same manner as in Example 2, except that ethylene vinyl acetate copolymer resin (product name: "SEPORJON VA", manufactured by Sumitomo Seika Co.

Example 5

A commercially available film (biaxially stretched polyethylene terephthalate film (PET)) with a thickness of 25 um was used as the base film. Copolymerized polyester resin (product name "SEPORJON ES", manufactured by Sumitomo Seika Co., Ltd.) (polyester) was used instead of modified polyolefin resin. Except for these conditions, the laminate was prepared by the same method as in Example 1.

Example 6

A laminate was prepared in the same manner as in Example 5, except that the surface-modified silica particles described in Example 2 were used in place of the hydrophobic oxide particles.

Example 7

A commercial film (low-density polyethylene film (LDPE)) with a thickness of 30 um was used as the base film. Polyolefin resin (product name "SEPORJON G", manufactured by Sumitomo Seika Co., Ltd.) (polyolefin B) was used instead of the modified polyolefin resin. Except for these conditions, a laminate was produced by the same manner as in Example 1.

Example 8

A laminate was prepared by the same method as in Example 7, except that the surface-modified silica particles described in Example 2 were used instead of the hydrophobic oxide particles.

Example 9

A commercially available film (biaxially stretched polypropylene film (OPP)) with a thickness of 40 um was used as the base film.

A dispersion was prepared by mixing 10 parts by weight of high-density polyethylene particles (HDPE, average particle diameter D50: 12 um, melting point: 136°C, density: 0.94 g/cm$^3$) to 100 parts by weight of a commercial polyolefin resin coating agent (heat-sealing coating agent). The dispersion liquid was applied to the corona-treated side of the aforementioned film by a bar coater and dried at 80°C for 10 seconds to form a heat seal layer containing the filled particles and a heat seal agent. The adhesion amount of the heat seal layer after drying was 3.0 g/m$^2$.

Next, a coating liquid for forming the porous functional layer was prepared. Hydrophobic oxide particles with water repellency (product name "AEROSIL R812S," Evonik Degussa; BET specific surface area: 200 m2/g; average primary particle diameter: 7 nm) and thermoplastic resin (modified polyolefin resin, product name "Zyxene A," Sumitomo Seika Co were added to ethanol, and a stirrer was used to stir the mixture at 2000 rpm for 5 minutes. The coating liquid was thus obtained. The mass ratio of hydrophobic oxide particles to thermoplastic resin in the coating liquid was 50:50, and the total solid content of hydrophobic oxide particles and thermoplastic resin in the coating liquid was 5 mass%.

The resulting coating liquid was applied to the heat-sealing layer described above by a bar coater, and then dried at 120°C for 60 seconds to form the porous functional layer. The coating amount of the porous functional layer after drying was 2.5 g/m$^2$.

Example 10

A laminate was prepared in the same manner as in Example 9, except that the surface-modified silica particles described in Example 2 were used in place of the hydrophobic oxide particles.

Comparative Example 1

A laminate was prepared by the same method as in Example 1, except that the mass ratio of hydrophobic oxide particles and modified polyolefin resin in the coating liquid was made to be 90:10.

Comparative Example 2

A laminate was prepared by the same method as in Example 2, except that the mass ratio of surface modified silica particles to modified polyolefin resin in the coating liquid was 90:10.

Comparative Example 3

A laminate was prepared by the same method as in Example 1, except that the mass ratio of hydrophobic oxide particles to modified polyolefin resin in the coating liquid was made to be 40:60.

Comparative Example 4

A laminate was prepared by the same method as in Example 2, except that the mass ratio of surface modified silica particles to modified polyolefin resin in the coating liquid was made to be 40:60.

Comparative Example 5

A laminate was prepared by the same method as in Example 1, except that the adhesion amount of the coating liquid after drying was 10.0 g/m$^2$.

Comparative Example 6

A laminate was made by the same method as in Example 2, except that the adhesion amount of the coating liquid after drying was 10.0 g/m$^2$.

Comparative Example 7

A laminate was made by the same method as in Example 1, except that the adhesion amount of the coating liquid after drying was set to 0.3 g/m$^2$.

Comparative Example 8

A laminate was made by the same method as in Example 2, except that the adhesion amount of the coating liquid after drying was 0.3 g/m$^2$.

Comparative Example 9

A laminate was prepared by the same manner as in Example 1, except that a polyester resin was used instead of the modified polyolefin resin.

Comparative Example 10

A laminate was prepared by the same method as in Example 2, except that a polyester resin was used instead of the modified polyolefin resin.

Comparative Example 11

A laminate was made by the same method as in Example 1, except that a vinyl chloride-vinyl acetate copolymer resin was used in place of the modified polyolefin resin.

Comparative Example 12

A laminate was prepared by the same method as in Example 2, except that a vinyl chloride-vinyl acetate copolymer resin was used in place of the modified polyolefin resin.

Comparative Example 13

A laminate was prepared by the same method as in Example 1, except that a copolymerized amide resin was used in place of the modified polyolefin resin.

Comparative Example 14

A laminate was prepared by the same method as in Example 2, except that a copolymer amide resin was used in place of the modified polyolefin resin.

Comparative Example 15

A commercially available film (biaxially oriented polypropylene film (OPP)) with a thickness of 40 um was used as the base film.
A dispersion of oil-repellent metal oxide composite particles (product name AEROSIL 200, manufactured by AEROSIL Japan, BET specific surface area: 200 $m^2$/g, average primary particle diameter: 12 nm) was prepared by adding it to ethanol. The solid content in the dispersion was 5 mass%.
The above dispersion was applied to the above film using a bar coater, and dried at 120°C for 60 seconds to form the oil-repellent layer. The coating amount of the oil-repellent layer after drying was 2.5 g/$m^2$.

Test Example 1 (Cross-sectional Observation and Occupancy Measurement)

(1) Cross-sectional observation

In the obtained laminate, a smooth cross-section was prepared by Ar ion beam irradiation using an ion milling device at an arbitrary point in plan view, and the formation of a porous functional layer containing a three-dimensional network structure was confirmed by observing the treated sample with a scanning electron microscope (SEM). As a representative example, the cross-sectional image of the laminate of Example 1 is shown in Figure 2.

(2) Measurement of Occupancy

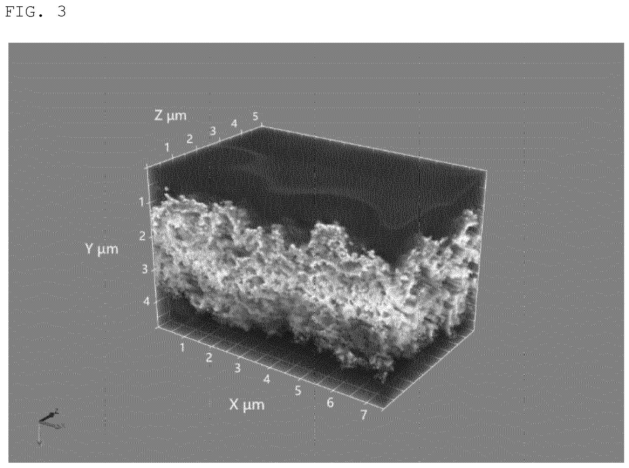

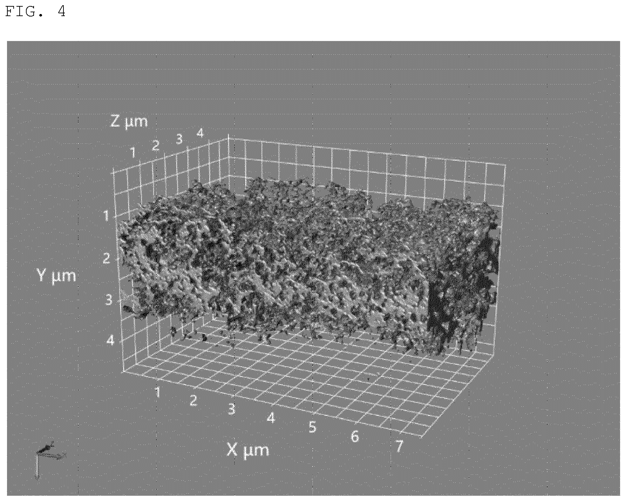

In the laminate, the porous functional layer at an arbitrary location in plan view was observed using FIB-SEM (NX5000, Hitachi High-Technologies Corporation) under the following conditions: electron emission current 21900 nA, working distance 4.0 mm, magnification 15,000x, and observation was made at every 50 nm pitch in the thickness direction. A total of 100 observation images were prepared.
The observed images were imported into commercially available image analysis software ("Image Pro + 3D module" (Media Cybernetics, Inc., USA), threshold condition: smart analysis, dark, automatic) to create a 3D image of 5 um × 5 um × 7 um size, and then the percentage of space occupied by functional particles in area A and area B was analyzed. More specifically, the 3D images were sliced every 400 nm in the thickness direction from the surface of the porous functional layer, and the porosity was defined as the area ratio of the void area to the total area of the sliced image. The aforementioned area ratio was calculated from the color tone (shading) of each slice image using the aforementioned image analysis software. The slice images were prepared by slicing to the areas where the porosity was form 0% to 100%. As an example, a 3D image of the porous functional layer prepared using FIB-SEM in the laminate of Example 1 is shown in Figure 3. Figure 4 also shows an analytical image of the area where only the porous functional layer is present in the aforementioned 3D image.

Test Example 2 (Water and oil repellency)

Water and olive oil were used to evaluate water and oil repellency. The water- and oil-repellent surface of each sample was used as the test surface, and water or olive oil was dripped onto the test surface to check the state of the droplets. Specifically, the test surface was placed on a slope with an inclination of 10 degrees so that the test surface faces up, and 1 mL of water or olive oil was dripped onto the test surface. As a result, when a droplet slid off, it was marked "○"; when a small amount of droplet remained but slid off, it was marked "△"; and when no droplet slid off, it was marked "×". The results are shown in Tables 1 to 2. Pure water was used as water. The olive oil used was commercially available product "AJINOMOTO Olive Oil" (edible olive oil) (Ajinomoto Co., Ltd.).

Test Example 3 (Abrasion Resistance)

A Gakushin-Type Dyeing and Rubbing fastness tester (YASUDA SEIKI SEISAKUSHO, LTD.) was used for durability evaluation. Each sample was cut to 15 mm × 150 mm, the stainless steel surface was brought into contact with the sample, and the durability test was conducted under the following conditions: load: 4.9 N, friction distance: 100 mm, speed: 30 round trips/min. When the water and oil repellency was remained after 100 round-trips, the test was judged as "○". When the water and oil repellency was no longer effective after 50 to 100 round-trips, the test was judged as "△". When the water and oil repellency was no longer effective after less than 50 round-trips, the test was judged as "×". The durability results are shown in Tables 1 through 2.

Table 1

| | Base film | thermoplastic resin | functional particle | mixing ratio | coating amount | Porosity | | water and oil repellency | | abrasion resistance |
|---|---|---|---|---|---|---|---|---|---|---|
| | | | | | | Region A | Region B | water | oil | |
| Example 1 | OPP | modified polyolefin | Hydrophobic oxide fine particles | 50:B0 | 2.5 | 68 | 41 | ○ | × | ○ |
| Example 2 | | | Oxide composite particle | 50:50 | 2.5 | 63 | 38 | ○ | ○ | ○ |
| Example 3 | | polyolefin A | Hydrophobic oxide fine particles | 50:50 | 2.5 | 57 | 37 | Δ | × | ○ |
| Example 4 | | | Oxide composite particle | 50:50 | 2.5 | 72 | 43 | Δ | Δ | ○ |
| Example 5 | PET | polyester | Hydrophobic oxide fine particles | 50:50 | 2.5 | 59 | 40 | ○ | × | ○ |
| Example 8 | | | Oxide composite particle | 50:50 | 2.5 | 62 | 41 | ○ | ○ | ○ |
| Example 7 | LDPE | polyolefin B | Hydrophobic oxide fine particles | 50:50 | 2.5 | 88 | 48 | ○ | × | Δ |
| Example 8 | | | Oxide composite particle | 50:50 | 2.5 | 70 | 47 | ○ | ○ | Δ |
| Example 9 | OPP + Seal layer | modified polyolefin | Hydrophobic oxide fine particles | 50:50 | 2.6 | 68 | 41 | ○ | × | ○ |
| Example 10 | | | Oxide composite particle | 50:50 | 2.5 | 70 | 42 | ○ | O | ○ |

EP 4 342 591 A1

Table 2

| | Base film | thermoplastic resin | functional particle | mixing ratio | coating amount | Porosity | | water and oil repellency | | abrasion resistance |
|---|---|---|---|---|---|---|---|---|---|---|
| | | | | | | Region A | Region B | water | oil | |

| | Base film | thermoplastic resin | functional particle | mixing ratio | coating amount | Porosity | | water and oil repellency | | abrasion resistance |
|---|---|---|---|---|---|---|---|---|---|---|
| | | | | | | Region A | Region B | water | oil | |
| Comparative Example 1 | OPP | modified polyolefin | Hydrophobic oxide fine particles | 90:10 | 2.5 | 85 | 63 | O | × | × |
| Comparative Example 2 | | | Oxide composite particle | 90:10 | 2.6 | 78 | 68 | ○ | ○ | × |
| Comparative Example 3 | | | Hydrophobic oxide fine particles | 40:60 | 2.5 | 24 | 39 | × | × | ○ |
| Comparative Example 4 | | | Oxide composite particle | 40:60 | 2.5 | 38 | 46 | × | × | ○ |
| Comparative Example 5 | | | Hydrophobic oxide fine particles | 50: 50 | 10 | 43 | 43 | × | × | ○ |
| Comparative Example 6 | | | Oxide composite particle | 50:50 | 10 | 46 | 41 | × | × | ○ |
| Comparative Example 7 | | | Hydrophobic oxide fine particles | 50:50 | 0.3 | NG | NG | × | × | × |
| Comparative Example 8 | | | Oxide composite particle | 50:50 | 0.3 | NG | NG | × | × | × |
| Comparative Example 9 | | polyester | Hydrophobic oxide fine particles | 50:50 | 2.6 | 72 | 60 | ○ | × | × |
| Comparative Example 10 | | | Oxide composite particle | 50:50 | 2.5 | 69 | 58 | ○ | ○ | × |
| Comparative Example 11 | | Vinyl chloride-vinyl acetate copolymer | Hydrophobic oxide fine particles | 50:50 | 2.5 | 63 | 63 | ○ | × | × |
| Comparative Example 12 | | | Oxide composite particle | 50:50 | 2.5 | 60 | 59 | ○ | ○ | × |
| Comparative Example 13 | | copolymerized amide | Hydrophobic oxide fine particles | 50:50 | 2.5 | 70 | 54 | ○ | × | × |
| Comparative Example 14 | | | Oxide composite particle | 60:60 | 2.6 | 62 | 57 | ○ | ○ | × |
| Comparative Example 15 | | non | Oxide composite particle | 0:100 | 2.5 | 62 | 63 | ○ | ○ | ×-× |

EP 4 342 591 A1

As is clear from Tables 1 and 2, in Example 1 to Example 10, when the porosity of the outermost surface side in the porous functional layer (Region A) is between not less than 50% and not more than 99% and the porosity of the base film side (Region B) is between not less than 1% and not more than 50%, it is found that the porous functional layer is strongly bonded to the base film and the outermost surface side has voids, as a result, the super water-repellent layer and super oil-repellent layer with excellent durability can be obtained.

In contrast, in Comparative Examples 1-4, it can be seen that, when the ratio of functional fine particles and thermoplastic resin is changed, sufficient performance cannot be obtained. In other words, increasing the ratio of functional fine particles results in poor adhesion between the base film and the porous functional layer, and increasing the ratio of thermoplastic resin results in non-performance of the porous functional layer.

In Comparative Examples 5-8, it is found that, when the amount of adhesion of the mixed solution after drying, the adhesion strength between the porous functional layer and the base film is sufficient, but water and oil repellency cannot be obtained. It is found that, if the amount of adhesion is too large, a uniform film cannot be formed in the drying process, thereby few voids are formed. It is found that, if the amount of adhesion is too little, the performance of the functional agent itself cannot exhibit.

In Comparative Examples 7-11, it can be seen that, if a thermoplastic resin with poor adhesion to the base film (OPP) is selected, the performance as a porous functional layer is obtained, but the adhesion to the base film is low.

**Claims**

1. A laminated body in which a porous functional layer including a thermoplastic resin and a three-dimensional network structure comprising water-repellent and/or oil-repellent fine particles adhered to each other is formed on a base film, wherein

   the porous functional layer has, in the thickness direction, a porosity from greater than or equal to 1 volume% to less than or equal to 50 volume% in the region from the bottom of the porous functional layer to 50% thickness of the porous functional layer, and a porosity from greater than or equal to 50 volume% to less than or equal to 99 volume% in the region from more than 50% thickness of the porous functional layer to the surface of the porous functional layer.

2. The laminated body according to claim 1, wherein the voids of the three-dimensional network structure at least in the region from the bottom of the porous functional layer to 50% thickness of the porous functional layer are filled with the thermoplastic resin.

3. The laminated body according to claim 1 or 2, wherein a portion of the porous functional layer is embedded in the base film.

4. The laminated body according to any one of claims 1 to 3, wherein the average primary particle diameter of the fine particles is 5 to 50 nm.

5. The laminated body according to any one of claims 1 to 4, wherein the mass ratio of the fine particles to the thermoplastic resin is 50:50 to 80:20.

6. The laminated body according to any one of claims 1 to 5, wherein the thermoplastic resin includes a polyolefin resin.

7. A method for producing a laminated body having water and/or oil repellency, comprising the steps of:

   (1) applying a coating liquid containing water and/or oil repellent fine particles and a thermoplastic resin to a base film; and
   (2) heat-treating the coated film obtained in the preceding step.

8. The manufacturing method according to claim 7, wherein the coating liquid is a dispersion liquid in which comprising water-repellent and/or oil-repellent fine particles and thermoplastic resin particles are dispersed in a solvent.

FIG. 1

FIG. 2

FIG. 3

FIG. 4

**INTERNATIONAL SEARCH REPORT**

International application No.

PCT/JP2021/019274

A.  CLASSIFICATION OF SUBJECT MATTER
B05D  3/02(2006.01)i;  B05D  5/00(2006.01)i;  B32B  5/18(2006.01)i;  B32B
9/00(2006.01)i; B32B 27/32(2006.01)i
FI: B32B5/18; B05D3/02 Z; B05D5/00 H; B32B9/00 A; B32B27/32 Z

According to International Patent Classification (IPC) or to both national classification and IPC

B.  FIELDS SEARCHED

Minimum documentation searched (classification system followed by classification symbols)
B05D3/02; B05D5/00; B32B5/18; B32B9/00; B32B27/32

Documentation searched other than minimum documentation to the extent that such documents are included in the fields searched
Published examined utility model applications of Japan            1922-1996
Published unexamined utility model applications of Japan          1971-2021
Registered utility model specifications of Japan                 1996-2021
Published registered utility model applications of Japan          1994-2021

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2012-228787 A (TOPPAN PRINTING CO LTD) 22 November 2012 (2012-11-22) claims 1, 2, paragraphs [0017], [0050] | 1-8 |
| X | JP 2018-62660 A (DAIWA CAN CO LTD) 19 April 2018 (2018-04-19) claims 1-3, 6, 7, 12, paragraphs [0034]-[0038], [0063]-[0071] | 1-8 |
| A | JP 2017-155183 A (SAKURANOMIYA KAGAKU KK) 07 September 2017 (2017-09-07) entire text | 1-8 |
| A | JP 2013-35559 A (SHOWA DENKO PACKAGING CO LTD) 21 February 2013 (2013-02-21) entire text | 1-8 |
| A | JP 2018-103473 A (DENKA CO LTD) 05 July 2018 (2018-07-05) entire text | 1-8 |

☒ Further documents are listed in the continuation of Box C.    ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

Date of the actual completion of the international search
05 July 2021 (05.07.2021)

Date of mailing of the international search report
13 July 2021 (13.07.2021)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

**INTERNATIONAL SEARCH REPORT**

International application No.

PCT/JP2021/019274

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2018-86786 A (TOYO SEIKAN GROUP HOLDINGS LTD) 07 June 2018 (2018-06-07) entire text | 1-8 |
| A | JP 2002-38102 A (BASF AG) 06 February 2002 (2002-02-06) entire text | 1-8 |

Form PCT/ISA/210 (continuation of second sheet) (January 2015)

**INTERNATIONAL SEARCH REPORT**
Information on patent family members

International application No.

PCT/JP2021/019274

| Patent Documents referred in the Report | Publication Date | Patent Family | Publication Date |
|---|---|---|---|
| JP 2012-228787 A | 22 Nov. 2012 | (Family: none) | |
| JP 2018-62660 A | 19 Apr. 2018 | (Family: none) | |
| JP 2017-155183 A | 07 Sep. 2017 | (Family: none) | |
| JP 2013-35559 A | 21 Feb. 2013 | (Family: none) | |
| JP 2018-103473 A | 05 Jul. 2018 | (Family: none) | |
| JP 2018-86786 A | 07 Jun. 2018 | (Family: none) | |
| JP 2002-38102 A | 06 Feb. 2002 | US 2002/0016433 A1 EP 1153987 A2 DE 10022246 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014152389 A
- JP 2017100778 A
- JP 2018187767 A
- JP 2018095799 A